# EUROPÄISCHE PATENTSCHRIFT

(11) **EP 0 836 549 B1**
(45) Veröffentlichungstag und Bekanntmachung des Hinweises auf die Patenterteilung: **20.09.2000**
(21) Anmeldenummer: 96923970.6
(22) Anmeldetag: 28.06.1996
(51) Int. Cl.: B29C 43/22, B29C 47/32, B29C 41/26

(54) **VERFAHREN UND VORRICHTUNG ZUR HERSTELLUNG EINES OBERFLÄCHENSTRUKTURIERTEN, FOLIENARTIGEN HALBZEUGS AUS EINEM THERMOPLASTEN**
PROCESS AND DEVICE FOR PRODUCING A SURFACE-STRUCTURED, SHEET-LIKE SEMIFINISHED PRODUCT MADE FROM A THERMOPLASTIC
PROCEDE ET DISPOSITIF PERMETTANT DE PRODUIRE UN PRODUIT SEMI-FINI THERMOPLASTIQUE, PELLICULAIRE, A SURFACE STRUCTUREE

(30) Priorität: 01.07.1995 DE 19524076
(43) Veröffentlichungstag der Anmeldung: 22.04.1998
(73) Patentinhaber: HCD Hygienic Composites Development GMBH, 45481 Mülheim an der Ruhr (DE)
(72) Erfinder: WAGNER, Werner, D-31542 Bad Nenndorf (DE)
(74) Vertreter: Hoffmeister, Helmut, Dr. Dipl.-Phys.
(86) Internationale Anmeldenummer: EP9602833
(87) Internationale Veröffentlichungsnummer: WO9702128

(56) Entgegenhaltungen:
- US-A- 2 681 294
- US-A- 3 374 303
- US-A- 3 515 778
- US-A- 3 551 544
- US-A- 3 555 601
- US-A- 4 445 458

## Beschreibung

Die Erfindung betrifft ein Verfahren zur Herstellung eines oberflächenstrukturierten, folienartigen Halbzeugs aus einem Thermoplasten gemäß Anspruch 1 und eine Vorrichtung zur Durchführung des Verfahrens.

Unter dem vorgenannten Begriff "Halbzeug" wird in erster Linie eine dünne flexible Folie verstanden; es soll jedoch nicht ausgeschlossen werden, daß auch dickeres Material auf diese Weise hergestellt wird.

Insbesondere kommt es darauf an, eine velourartige oder genarbte, gegebenenfalls auch in Kombination velourartig und genarbte Oberfläche, bei dem genannten Halbzeug herzustellen. Dabei soll auch nicht ausgeschlossen werden, daß das Halbzeug anschließend an seine Herstellung oder auch während einer Abkühlungsphase auf seiner nichtstrukturierten Seite mit einem textilen Stoff, einem Vlies, Schaumstoff oder Papier belegt wird.

Ein bekanntes Verfahren zur Herstellung von Kunststoff:Halbzeugen mit einer faserartigen Oberfläche geht von einer sogenannten Faser-Negativmatrize aus. In einer kompliziert hergestellten Faservorform werden die Fasern ausgebildet, über ein Klebebett mit einem textilen Trägermaterial verbunden und aus der Matrize herausgezogen. Dieser Prozeß erlaubt die Herstellung von vielfältigen Velourprodukten, auch aus Thermoplasten. Die Halbzeuge werden beispielsweise für Fahrzeuginnenteile verwendet.

Es ist jedoch nicht zu übersehen, daß dieses Verfahren extrem schwierig und kostspielig durchführbar ist. Nach diesem Verfahren hergestellte Velourkunststoffe sind daher preislich nicht akzeptabel.

In der OE-Patentschrift 337 444 ist ein Verfahren und eine Vorrichtung zum kontinuierlichen Formen eines Kunststoffgegenstandes bekannt, bei denen in eine Reihe von Formhohlräumen ein Kunststoffmaterial eingebracht wird, während die Formhohlräume entlang einer endlosen, geschlossenen Bahn, insbesondere Kreisbahn, an einer Kunststoffauftrageinrichtung vorbeibewegt werden. Nach dem Verfestigen des fertigen Gegenstandes besitzt dieser den Formhohlräumen entsprechende "Glieder", die aus den Formhohlräumen abgezogen werden.

Diese Art der Kunststoff-Verformung erlaubt nur sehr kurze "Glieder", da die in den Formhohlräumen befindliche Luft durch den flüssigen Kunststoff zunächst verdrängt werden muß, was bei tiefergehenden Hohlräumen nicht möglich ist. Man kann hier also nur leicht strukturierte, genarbte Oberflächen herstellen.

Bekannt ist ferner aus der DE 34 07 318 C1 eine Walze zum Herstellen einer perforierten und eventuell geprägten Kunststoffolie mit einer rotierenden, zylinderförmigen Siebfläche, mit welcher die Perforierung und eventuell die prägende Folie erfolgt. Die Siebfläche ist an der Walzeninnenseite mit einem Saugkasten unterlegt, der die Kunststoffolie nach innen saugt und dadurch in die Siebprägungen hineinzieht und Perforationen erzeugt. Zusätzlich kann noch eine Gegenwalze eingesetzt werden, die die so hergestellte Kunststoffolie zusätzlich prägt.

Eine velourartige Oberfläche, insbesondere mit einer geschlossenen Oberfläche, kann mit dieser Vorrichtung nicht hergestellt werden.

Die US 3 515 778 zeigt eine Vorrichtung, bei der ein Extruder eine unter Druck stehende Schmelze an eine Extruder-Mündung liefert, die oberhalb einer mit einer Negativstruktur versehenen Walze aufgebracht. Dabei wird mit einer Rakel (doctor blade), die unmittelbar vor der Extruder-Mündung angebracht ist, ein Druckabfall verhindert. Da die Negativstruktur auf denn Walzenmantel mit zahlreichen Verbindungskanälen ausgerüstet ist, erfolgt eine Fließen der Schmelze gleichmäßig unter dem Druck des Extruders in alle Verästelungen der Oberfläche. Nachteilig hierbei ist, daß nur speziell auf die Druckverteilung abgestimmte Matrixkonfigurationen verwendet werden können.

Aus der US A 3 555 601 ist eine Vorrichtung bekannt, bei der erhitztes thermoplastisches Material in Form einer Folie extrudiert wird und über eine mit Kavitäten besetzte Walze geschickt wird. Mit einer Oberwalze wird das thermoplastische Material in die Kavitäten eingedrückt. Die Kavitäten besitzen an ihrer Sohle jeweils Ventilationsöffnungen, durch die die Luft entweichen kann. Nachteilig bei dieser Vorrichtung ist, daß die erwärmte thermoplastische Masse in ihrer Konsistenz genau festgelegt sein muß, um auf der einen Seite nicht von der Walze zu fließen und auf der anderen Seite noch in die Kavitäten leicht eingedrückt werden zu kennen. Außerdem setzen sich erfahrungsgemäß die Ventilationsöffnungen beim Herausziehen der geformten Folie leicht zu, so daß sich die Kavitäten beim nachfolgenden Durchgang der Walze nicht mehr füllen.

Es stellt sich demnach die Aufgabe, die bekannten Prinzipien zu verlassen und ein Verfahren anzugeben, mit dem eine große Mannigfaltigkeit von strukturierten, folienartigen Halbzeugen hergestellt werden kann, insbesondere auch solchen, die eine velourartige oder samtartige Oberfläche haben, die zahlreiche faserartige Überstände aufweist und ein Füllen und Entleeren der Kavitäten zuverlässig ermöglicht.

Diese Aufgabe wird bei einem Verfahren zur Herstellung eines oberflächenstrukturierten, folienartigen Halbzeugs aus einem Thermoplasten gemäß Oberbegriff des Anspruches 1 gelost, indem die Band- oder Walzenoberfläche bereichsweise von außen her einem Unterdruck ausgesetzt wird, der unmittelbar (gegen die Laufrichtung der Oberfläche) vor der Austrittsfront sein Maximum hat, so daß die zu der Matrix gehörenden Kavitäten unter Unterdruck stehen, wenn die Austrittsfront sie erreicht, und diese Kavitäten vom thermoplastischen Kunststoffmaterial völlig ausgefüllt werden.

Es hat sich überraschenderweise gezeigt, daß die Matrix, d.h. die Oberflächenstruktur, sehr feingliedrig sein kann. Durch das vorherige Evakuieren können Poren mit einem Thermoplasten gefüllt werden, die nach dem Stand der Technik wegen der darin verbleibenden Luft nicht gefüllt werden können. Es können Velour-Fasern von mehr als 3 mm Länge hergestellt werden, wobei diese Fasern Durchmesser haben bis hinunter zu 0,01 - 0,02 mm haben; selbstverständlich auch größere Durchmesser. Es können mit Hilfe neuzeitlicher Lasertechniken derartige feinste Bohrungen angebracht werden, wobei schon 5.000 - 10.000 Laserbohrungen pro cm² in eine PTFE (Polytetrafluorethylen)-Schicht eingebohrt wurden. Andere Walzenmaterialien, wie Keramika oder Metalle, sind ebenfalls einsetzbar. Der erforderliche Unterdruck liegt zwischen 0,1 bis 3,0, vorzugsweise zwischen 0,1 und 0,3 bar.

Die Abkühlung und Erstarrung des die Austrittsfront verlassenden thermoplastischen Kunststoffmaterials geschieht innerhalb einer weiteren Drehung der Walze zwischen 180 bis 300° Walzen-Drehwinkel, wobei Kühlmedien und Drehgeschwindigkeit entsprechend anzupassen sind. Die Abkühlung erfolgt vorzugsweise mittels von außen her an das erstarrende thermoplastische Material angeblasener Kühlluft. Es sei aber auch nicht ausgeschlossen, daß die Walze selbst durch entsprechende Kühlmedien abgekühlt wird.

Damit wird dem aus einer Düse austretenden polymeren Thermoplasten in situ eine definierte Oberflächenstruktur gegeben. Ohne besondere Vorkehrungen ergibt sich eine feinstrukturierte Ausbildung der Oberfläche ohne Lufteinschlüsse. Für das Verfahren eignen sich Thermoplasten vierschiedenster chemischer Struktur. Im Augenblick des Schmelzaustritts aus dem Extruder sollte eine niedrige Viskosität der Schmelze vorhanden sein, wobei sich auch dieses wiederum danach richtet, welche Feinheit des Velours und welche Tiefe der Poren auszufüllen ist. Im allgemeinen wird eine niedrige Viskosität bei Thermoplasten vorhanden sein, die einen relativ hohen Schmelzindex haben, wobei eine relativ hohe Schmelztemperatur angewendet wird.

Auch können Additive, die eine Viskositätsreduktion be wirken, durch Polymermischungen eingebracht werden. Besonders gut geeignet sind Polymere, die einen engen Schmelzbereich aufweisen, z. B. Polyolefine, die nach dem Metallocen-Verfahren hergestellt worden sind. Es eignen sich auch Polyester, die durch Copolymerisation weich und elastisch eingestellt worden sind, thermoplastische Polyurethane, Polyether- und Polyester-Amide.

Die für den Prozeß eingesetzte Walze wird im Bereich ihrer Matrix auf einer Temperatur von 20° bis 120° C gehalten. Auch hier kann der Fachmann diese Parameter variieren, da er die entsprechenden Temperatur-Beiwerte der verwendeten Polymere kennt.

Nach Weiterdrehung der Walze wird der Polymerauftrag vorzugsweise von der Außenseite her abgekühlt. Dies kann durch Aufblasen von gekühlter Luft oder aber auch durch zusätzliches Anlegen einer Kühlwalze erreicht werden. Das Halbzeug muß durch die Kühlung während der Drehung der Walze in einen Zustand gebracht werden, so daß es von der Matrixwalze leicht abgezogen werden kann. Nach weiterer Abkühlung mittels Kühlwalzen oder Kühlbändern ist die Folie oder das Halbzeug zur Endkonfektion bereit.

Mit dem Verfahren kann auch ein aus zwei Schichten bestehendes Halbzeug erzeugt werden, von denen die mit der Oberfläche in Kontakt kommende Schicht (Kontaktschicht) in die Matrix eindringt und die andere als Oberschicht auf der unteren Schicht fest haftet. Dabei hat die Oberschicht vorzugsweise einen niedrigeren Schmelzindex als die Kontaktschicht.

Vorzugsweise sollte der Schmelzindex der Oberschicht zwischen 3 und 30 und der Schmelzindex der mit der Oberfläche in Kontakt kommenden Schicht zwischen 70 und 300 liegen (messung des Schmelzindex gemäß DIN 53735, Prüfungvorschrift A bei 190° und2,16 kg Belastung).

Die Oberschicht und die Kontaktschicht können aus dem gleichen Polymer bestehen oder derselben Polymerfamilie entstammen; sie können aber auch chemisch unterschiedlich sein, wobei sich beispielsweise folgenden Paarungen anbieten:
Polyethylen - Polypropylen
Polyethylen - (Co)-Polyester

Eine etwas höhere Dicke der Folie erleichtert das Abziehen von der Matrix-Oberfläche. Hierzu wird vorgeschlagen, daß die Folie relativ dick hergestellt wird und anschließend durch Verstrecken in wenigstens einer Richtung verdünnt wird. Die Länge der Verstreckung ist vorzugsweise 150 bis 200% der Ursprungsausdehnung.

Wie bereits angedeutet, kann das Halbzeug (die Folie) vor dem Erkalten auch mit einer Vlieslage, einem Gewebe oder Gewirke kaschiert werden. Auch andere Kaschierungen sind möglich, beispielsweise mit Papier oder Holzfasern.

Die Erfindung bezieht sich außerdem auf eine Vorrichtung zur Durchführung des Verfahrens, gemäß Anspruch 13.

Im Gegensatz zum Stand der Technik gemäß DE 34 07 318 C1 oder US 3.555.601 ist demnach die Walze geschlossen. Trotzdem ist es möglich, eine Matrix mit sehr feiner Struktur bis hin zu feinsten Poren mit einem geschmolzenen Thermoplasten zu befüllen, da durch Anwendung des Vakuums die entsprechenden Poren vorher evakuiert sind.

Der Schirm ist vorzugsweise mit einer Vakuumpumpe verbunden, so daß ein gleichmäßiges Vakuum während der Laufzeit aufrecht erhalten werden kann.

Der Schirm kann relativ umfassend sein, so daß seine umlaufende Unterkante auch die Austrittsmündung des Extruders umschließt. Es ist aber auch möglich, die umlaufende Unterkante unmittelbar vor der Austrittsmündung des Extruders enden zu lassen, wobei diese sehr eng über der Walze angeordnet ist, so daß das Vakuum in der kurzen Strecke zwischen dem Maximum unterhalb des Schirms bis zur Austrittsfront praktisch nicht unterbrochen ist.

Die Matrix der Walze ist in eine thermisch stabile Mantelschicht aus Kunststoff eingearbeitet, wobei beispielsweise diese Mantelschicht aus einem Kunststoff aus der Gruppe Silikonkautschuk, Polytetrafluorethylen, Polyester, Polyetherimide, Polysulfone, Polyamide, Polycarbonate oder elastische Fluor-Polymere besteht. Sie kann auch unter Verwendung von Reaktionsharzen, wie Expoxydharz, oder aus ungesättigtem Polyesterharz hergestellt sein.

Insbesondere dann, wenn die Vorrichtung geeignet sein soll zur Herstellung von mit velourartiger Oberfläche versehenem Halbzeug, ist die Matrix mit sehr feinen Poren versehen. Die Walze kann aber zusätzlich auch entsprechend einer Narbung graviert sein. Die Bohrdichte bei einem Velour beträgt beispielsweise 80 - 85 %, d. h. 80 % der Oberfläche können von Bohrungen eingenommen werden, während 20 % geschlossen sind, und die zwischen den Bohrungen liegenden Stege darstellen. Die Bohrtiefe beträgt beispielsweise 0,5 bis 5 mm, vorzugsweise bei einem Velour zwischen 2 bis 4 mm. Es können Strich-Konfigurationen hergestellt werden, d. h. die haarfeinen Poren liegen in Radialrichtung und in von der Radialenrichtung abweichenden Richtungen. Sowohl Kurzfasern als Langfasern können vorgesehen werden.

Ausführungsbeispiele werden anhand der Zeichnung erläutert. Die Figuren der Zeichnung zeigen:
- Fig. 1a/1b: in schematischer Seitenansicht eine Walze mit den weiteren Aggregaten gemäß Erfindung;
- Fig. 2a bis 2c: verschiedene Matrix-Strukturen der Walze;
- Fig. 3: im Detail Walze mit Abzugswalze und dem herstellbaren Halbzeug.

Das Verfahren ermöglicht u.a. die Herstellung von velourartigen und/oder mit Narbungen verschiedenster Art versehenen Folien unter Verwendung von thermoplastischen Polymeren. Unter thermoplastischen Polymeren oder "thermoplastischem Kunststoffmaterial" sollen solche Stoffe verstanden werden, die einen definierten Schmelzpunkt oder einen Schmelzintervall aufweisen, das sie für das nachfolgend beschriebene Verfahren geeignet macht.

### Beispiel 1

Zur Herstellung eines Polyethylen-Velourmaterials wurde ein LLDP-Polymer mittleren Molekülgewichtes mit einem Schmelzindex von -15 (2,16 kg/190° C) und einer Dichte von 0,94 g/cm³ verwendet.

In einem Einschneckenextruder, schematisch mit der Bezugszahl 1 angedeutet, der eine Schneckenlänge größer alsdem 20fachen Durchmesser mit einem Schneckendurchmesser von 90 mm hat, wurde das Material aufgeschmolzen und homogenisiert.

Die Kunststoff-Schmelze 3 gelangt durch einen entsprechenden Kanal bis an die Extruder-Mündung 2.

Bei der Homogenisierung und Extrusion wurde ein Kompressionsverhältnis von 1 : 2,5 und eine Schneckentemperatur von 250° C gehalten. Die Polyethylen-Schmelze wurde unter

konstantem Druck der Austragsdüse mit der Mündung 2 zugeführt.

Die Austragsdüse ist eingebaut in einen Vakuumschirm 6, der eine auch die Mündung 2 umfassende Vakuumkammer umschließt. Die Vakuumkammer, die der Vakuumschirm 6 umschließt, endet mit entsprechenden Schleiflippen 16 unter Kontakt an der Walzenoberfläche, so daß das mittels einer Vakuumpumpe 7 erzeugte Vakuum sich bis zur Walzenoberfläche ausbreitet und nicht durch seitlich hereinströmende Luft wesentlich gestört wird. Die ungestörte Aufrechterhaltung des Vakuums ist für das Verfahren von größter Bedeutung.

Die Matrixwalze wird zunächst auf einer Oberflächentemperatur von 45- 50° C gehalten. Der Unterdruck ist unmittelbar an der Extruder-Mündung 2 mit 0,2 bis 0,5 bar zu bemessen. Insbesondere die Mündung 2 sitzt auf dem Walzenmantel 5 auf und bildet auch einen Abschluß in die Laufrichtung der Walze hinein. Auf der anderen Seite bildet die austretende Kunststoff-schmelze 3 eine Abdichtung gegenüber dem Vakuumraum.

Das sich ausbildende relativ hohe Vakuum bewirkt, daß die Walzenoberfläche mit der darauf befindlichen Matrix bereichsweise von außen her einem Unterdruck ausgesetzt wird, der unmittelbar vor der Austrittsfront 17 an der Mündung 2 sein Maximum hat, so daß die zu der Matrix gehörenden Kavitäten praktisch luftleer sind, wenn die Austrittsfront 17 sie erreicht. Diese Kavitäten werden dementsprechend völlig von thermoplastischem Kunststoffmaterial 3 ausgefüllt.

Das ausgetretene Kunststoffmaterial 3 bildet eine Schicht auf dem Walzenmantel 5. Bei Weiterdrehen der Walze 4 kommt diese Schicht in eine Kühlzone, die von zahlreichen Luftdüsen 11 gebildet ist, die aus einem Kühlluftgebläse 12 austreten, das an ein entsprechendes Zuführungsrohr 13 angeschlossen ist, aus dem gekühlte Luft strömt. Nach Durchlaufen einer Kühlstrecke 23 von etwa 180° ist das geschmolzene thermoplastische Kunststoffmaterial auf der Oberfläche liegend durch Abkühlung zum Erstarren gebracht, wobei es auf der mit der Walze in Kontakt gebrachten Seite die der Matrix entsprechende Oberflächenstruktur annimmt.

Kurz vor dem Vakuumschirm 6 ist eine Abzugswalze 14 angeordnet, die die Folie oder das Halbzeug aufnimmt und von der Walze 4 abzieht. Das abgezogene Halbzeug 9 wird anschließend beispielsweise noch durch ein Paar Kühl- oder Prägewalzen 15 hindurchgezogen und anschließend auf eine Vorratsrolle spannungsarm aufgewickelt.

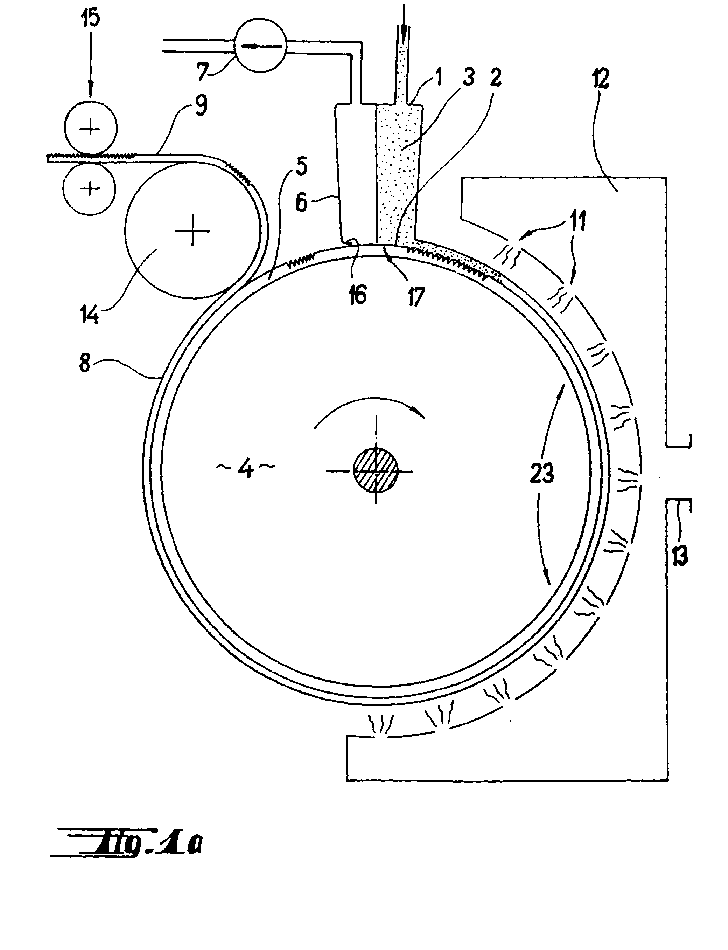

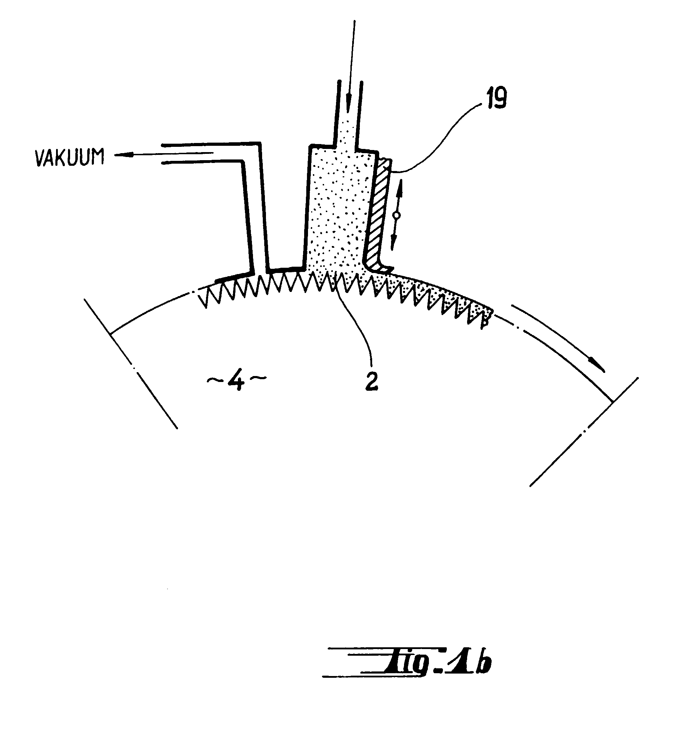

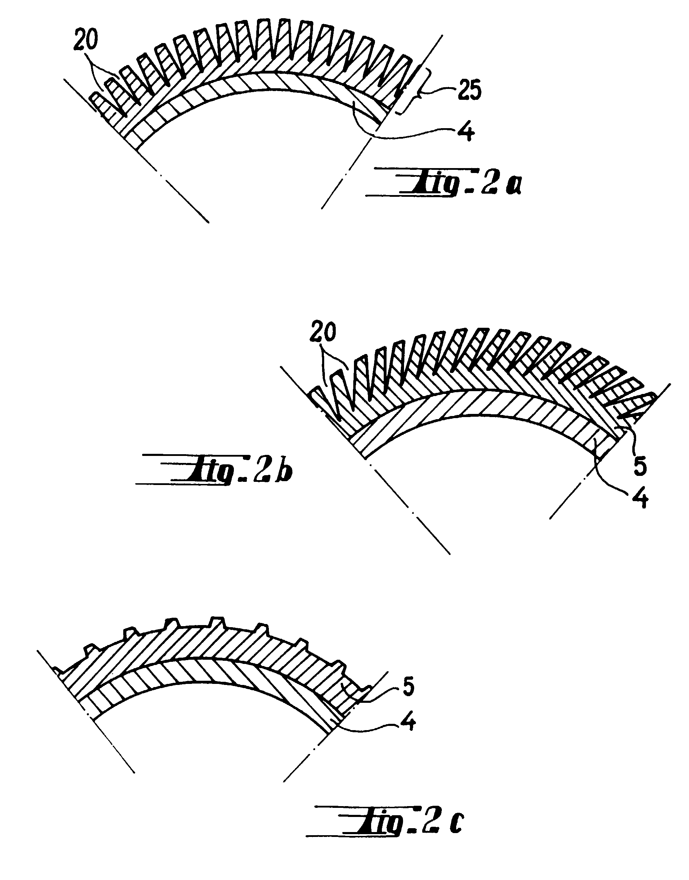

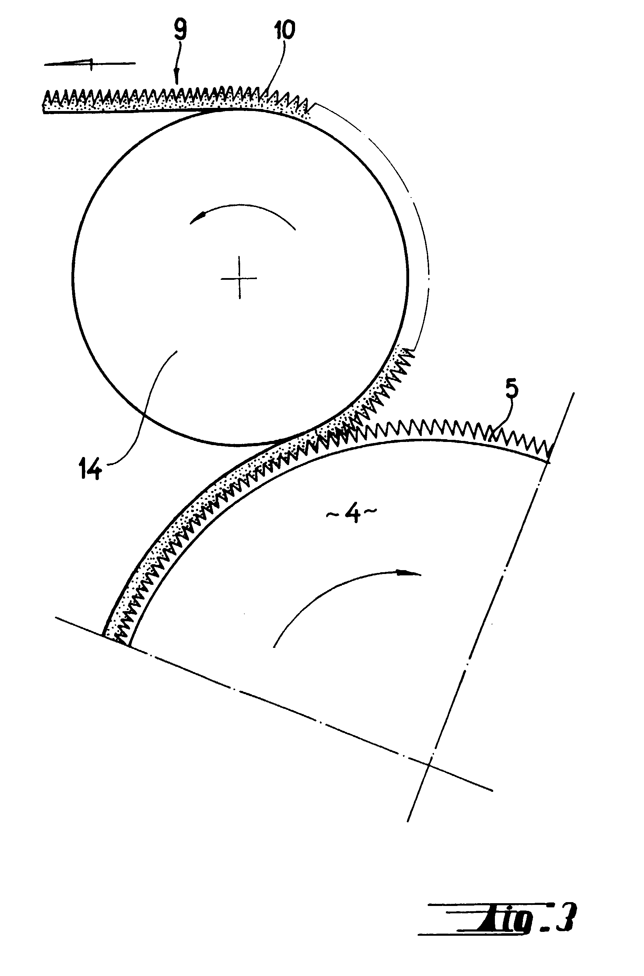

Die Walze 4 stellt eine Präzisionsheiz- und Kühlwalze dar, die vorzugsweise einen etwa 5 mm dicken Mantel aus Polytetrafluorethylen besitzt. In diese PTFE-Schicht wurde mit Hilfe eines CO²-Lasers eine große Anzahl von Laserbohrungen eingeschossen oder eingefräst, beispielsweise 5000 Laserbohrungen pro cm². Wie die Fig. 2a schematisch zeigt, sind diese Bohrungen 20, auch als Kavitäten bezeichnet, in Form von nadelartigen Kegeln eingebohrt, wobei ihre Tiefe beispielsweise 2 mm und ihre Ausdehnung im Bereich der Manteloberseite etwa 0,02 mm beträgt. Dabei wurde eine sehr hohe Bohrdichte erreicht, beispielsweise 84 % nimmt die Bohrfläche ein. Eine Abbildung einer solchen Matrix 25 liefert einen sehr feinen und gleichmäßigen Faserflor.

Wie Fig. 2b zeigt, ist auch ein Strich der Faseranordnung möglich. Hierzu werden die Poren in Abweichung von der Radialvorrichtung der Walze in die Manteischicht 5 eingebracht. Darauf hinzuweisen ist, daß innerhalb der Walze 4 keine weiteren Vakuum-Vorrichtungen vorzusehen sind, d. h. daß die Kavitäten zum Inneren des Mantels 5 hin hermetisch abgeschlossen sind.

### Beispiel 2

Zur Herstellung einer velourartigen Polypropylen-Folie wurde zur Ausbildung der Velourfolie ein Extruder wie in Beispiel 1 verwendet. Wegen der höheren Viskosität des geschmolzenen Polypropylens werden Extrusionstemperaturen, die etwa 120 130° C über dem des Polyethylens liegen, verwandt. Zum Einsatz kommt ein Polymer mit einem Schmelzindex von 20 und einer Dichte von 0,965 g/cm³.

In Abänderung des Ausführungsbeispiels gemäß Fig. 1 umfaßt der Vakuumschirm 6 hier nicht auch die Düse mit der Mündung 2, sondern endet kurz vor der Düse, die etwa 5 mm oberhalb der Mantel-Peripherie endet. Auch hier ist strikt die Konstruktion darauf abzustellen, daß keine Unterbrechung des Vakuums eintritt.

### Beispiel 3

Eine besonders Interessante Velouroberfläche mit einer Vorrichtung gemäß Fig. 1 erhält man, wenn ein thermoplastisches Polyurethan, d. h. sowohl ein Polyester- als auch ein Polyätherurethan, auf Basis von Methylendiisocyanat und 1,4 Butandiol unter zusätzlicher Verwendung von längerkettigen Dihydroxyverbindungen verwendet wird, wobei hierzu noch polymere Diole als Kettenverlängerer eingesetzt werden. Die so erhaltenen thermoplastischen Polyurethane werden im Extruder aufgeschmolzen. Aus dem Extruder werden sie auf den Walzenmantel 5 mit einer Auftragsdüse aufgetragen. Hierbei entsteht eine sehr weiche, hochelastische Polyurethan-Velour-Folie.

Die Schmelztemperatur beträgt in diesem Falle 230 - 250° C. Der Schmelzindex liegt bei 30.

Es hat sich gezeigt, daß eine dünnflüssige Polymerschmelze die Walzenoberfläche auch bei sehr feiner Struktur sehr gut abbildet. Die entstehende Velouroberfläche ist sehr abriebfest. Sie besitzt einen guten Griff und läßt sich auch in der Masse färben.

### Beispiel 4 (vgl. Fig. 1b)

Ein Copoly(ester)-Elastomeres unter dem Handelsnamen Arnitel von der AKZO Arnitel 400 oder Arnitel 460 oder ein vergleichbares Produkt von GE-Lomod wurde zur Filmbildung herangezogen.

In diesem Fall wurde die eingesetzte Filmauftragsvorrichtung dahingehend verändert, daß hier der Film nicht wie in Beispiel 1 - 3 aufgegossen wurde, sondern der Schmelzefilm aufgestrichen wurde. Dies gelingt durch eine leichte Modifikation der Auftragsvorrichtung. Die auftragsdüse wurde durch eine rakelartige Frontseite ergänzt. In Maschinenrichtung wurde die Vorderseite der Vakuumsbegrenzung durch ein Rakel 30, das oben und unten verschiebbar ist, ausgetauscht. Der Abstand dieses Rakels zur Matrixwalze 4 bestimmt hier die Folienstärke. Das Rakel muß wie die ganze Auftragsvorrichtung beheizbar sein und
wird bei Schmelztemperaturen von ca. 210-230°C gefahren.

Die im Überschuß aus dem Extruder kommende Schmelze wird durch die Matrixwalzendrehung gegen das Rakel gepreßt. Die Schmelze füllt den Vorlageraum voll aus und dichtet zusätzlich das Vakuum in Fahrtrichtung ab. Der Film wird im Rakelspalt durch den Rakelabstand von der Matrixwalze in seiner Stärke bemessen. Die Masse füllt die durch das vorlaufende Vakuum luftfrei gemachten Kavernen aus.

Im Gegensatz zu den Beispielen 1 - 3 handelt es sich hier um einen Beschichtungsprozess.

### Beispiel 5

Anstelle einer mit porenartigen Kavitäten versehenen Walze wird für die Verfahren gemäß Beispielen 1 bis 4 eine Walzenkonfiguration gemäß Fig. 2c verwendet. Hierbei sind durch entsprechende Strukturen eine Narbung vorgesehen.

### Beispiel 6

Unmittelbar nach Durchlaufen der Kühlstrecke 12 wird auf den Rücken der sich noch auf dem Walzenmantel befindlichen Folie ein feines textiles Gewebe aufkaschiert, beispielsweise mittels Klebstoff. Der Klebstoff härtet aus und nach Durchlauf der Strecke wird ein kaschierter Veloursstoff abgezogen.

### Beispiel 7

Das Verfahren wird mit einem Band durchgeführt, dessen Oberfläche analog zu der Oberfläche der Walze mit einer in ihrer Temperatur einstellbaren Matrixoberfläche versehen ist.

### Beispiel 8

Mit Hilfe einer Mehrfachproduktdüse wird gleichzeitig eine Oberschicht und eine Kontaktschicht auf die Walzenoberfläche gelegt. Bei der Kontaktschicht handelt es sich um ein Polyethylen mit einem Schmelzindex zwischen 100 und 300 und bei der Oberschicht um ein Polyäthylen mit einem Schmelzindex zwischen 5 und 20. Nach Abkühlung wird die entstandene Mehrschichtfolie nur an der Oberschicht ergriffen und von der Walze abgezogen. Die Kontaktschicht fließt dann relativ leicht aus den Kavitäten.

Eine zweischichtige Folie ist durch eine entsprechende Oberschicht mit höherer Zähigkeit und Reißfestigkeit ausgerüstet.

### Beispiel 9

Anstelle eines Textilstoffes kann auch eine Schaumfolie, Papier oder ein Vlies, gegebenenfalls auch eine weitere Klebstoff-Folie, ein Metallblech oder ein Holzwerkstoff als Oberschicht verwendet werden.

## Patentansprüche

1. Verfahren zur Herstellung eines oberflächenstrukturierten, folienartigen Halbzeugs aus einem Thermoplasten, bei welchem Verfahren
- ein thermoplastisches Kunststoffmaterial in geschmolzenem Zustand auf eine sich bewegende und in ihrer Temperatur einstellbare, gegenüber der erwünschten Struktur als Negativstruktur (Matrix) ausgearbeitete Band- oder Walzenoberfläche (5) mit Kavitäten in einer quer zur Fortbewegungsrichtung liegenden Austrittsfront (17) extrudiert wird, wobei das thermoplastische Kunststoffmaterlal entsprechend der Struktur die Oberfläche (5) satt kontaktiert, das geschmolzene thermoplastische Kunststoffmaterial - noch auf der Oberfläche liegend - durch Abkühlung zum Erstarren gebracht wird, wobei es auf der mit der Band- oder Walzenoberfläche (5) in Kontakt gebrachten Seite die entsprechende Oberflächenstruktur annimmt
- und nach dem Erstarren das Halbzeug von der Oberfläche abgezogen wird,
dadurch gekennzeichnet, daß
die Band- oder Walzenoberfläche (5) bereichsweise von außen her einem Unterdruck ausgesetzt, der unmittelbar (gegen die Laufrichtung der Oberfläche) vor der Austrittsfront sein Maximum hat, so daß die zu der Matrix (25) gehörenden Kavitäten (20) unter Unterdruck stehen, wenn die Austrittsfront sie erreicht, und diese Kavitäten vom thermoplastischen Kunststoffmaterial völlig ausgefüllt werden.

2. Verfahren nach Anspruch 1, dadurch gekennzeichnet, daß die Walzenoberfläche (5) die Außenseite eines zylindrischen Walzenmantels ist.

3. Verfahren nach Anspruch 1, dadurch gekennzeichnet, daß der Unterdruck zwischen 0,1 bis 3,0 (10 und 300 kPa), vorzugsweise zwischen 0,1 und 0,3 bar(10 und 30 kPa) unter dem Umgebungsdruck liegt.

4. Verfahren nach Anspruch 2, dadurch gekennzeichnet, daß die Abkühlung und Erstarrung des die Austrittsfront verlassenden thermoplastischen Kunststoffmaterials innerhalb einer weiteren Drehung der Walze zwischen 180 bis 300° Walzen-Drehwinkel erfolgt.

5. Verfahren nach einem der vorhergehenden Ansprüche, dadurch gekennzeichnet, daß zur Herstellung eines Halbzeuges, insbesondere einer Kunststoffolie, mit einer velourartigen Oberfläche, die Matrix zahlreiche Poren (20) umfaßt.

6. Verfahren nach einem der vorhergehenden Ansprüche, dadurch gekennzeichnet, daß das Verfahren mit Thermoplasten aus folgender Gruppe durchgeführt wird: Polyolefine, Polyester, Polyurethane, Polyäther, Polyesteramide sowie Mischungen oder Copolymerisate daraus.

7. Verfahren nach einem der vorhergehenden Ansprüche, dadurch gekennzeichnet, daß ein aus zwei Schichten bestehendes Halbzeug erzeugt wird, von denen die mit der Band- oder Walzenoberfläche (5) in Kontakt kommende Schicht in die Matrix eindringt und das andere als Oberschicht auf der unteren Schicht fest haftet.

8. Verfahren nach Anspruch 7, dadurch gekennzeichnet, daß die Oberschicht einen niedrigeren Schmelzindex hat als die mit der Band- oder Walzenoberfläche (5) in Kontakt kommende Schicht (Kontaktschicht).

9. Verfahren nach Anspruch 8, dadurch gekennzeichnet, daß der gemäß DIN 53735 bei Prüfbedingungen 2,16 kg und 190°C gemessene Schmelzindex der Oberschicht zwischen 3 und 30 und der Schmelzindex der mit der Band- oder Walzenoberfläche (5) in Kontakt kommenden Schicht zwischen 100 und 300 bei Prüfbedingungen 2,16 kg/190°C liegt.

10. Verfahren nach Anspruch 7, dadurch gekennzeichnet, daß die Oberschicht und die Kontaktschicht chemisch unterschiedlich sind und beispielsweise aus folgenden Paarungen bestehen:
- Polyethylen ./. Polypropylen
- Polyethylen ./. Polyester.

11. Verfahren nach einem der vorhergehenden Ansprüche, dadurch gekennzeichnet, daß die Folie vor dem Erkalten mit einer Vlieslage kaschiert wird.

12. Verfahren nach einem der vorhergehenden Ansprüche, dadurch gekennzeichnet, daß die Folie relativ dick hergestellt wird und anschließend durch Verstrecken in wenigstens einer Richtung verdünnt wird.

13. Vorrichtung zur Durchführung des Verfahrens nach Anspruch 1 und ggf. weiteren Ansprüchen, mit folgenden Einzelteilen:
- einem Extruder (1),
- einem(r) dem Extruder zugeordneten Band oder Walze (4) mit einer in ihrer Temperatur einstellbaren Band- oder Walzenoberfläche (5), die eine mit zahlreichen Kavitäten (20) besetzte Struktur aufweist,
dadurch gekennzeichnet, daß
die Kavitäten zum Inneren des Bandes oder der Walze (4) hin hermetisch geschlossen ist und daß im Bereich der Mündung des Extruders ein abgedichtet auf der Band- oder Walzenoberfläche (5) gleitend aufliegender Schirm (6) angeordnet ist, in dem ein Unterdruck erzeugbar ist, so daß unmittelbar vor der Austrittsfront (17) der plastifizierten Kunststoffmasse die Kavitäten (20) evakuierbar sind.

14. Vorrichtung nach Anspruch 13, dadurch gekennzeichnet, daß der Schirm (6) mit einer Vakuumpumpe (7) verbunden ist.

15. Vorrichtung nach Anspruch 14, dadurch gekennzeichnet, daß eine umlaufende Unterkante des Schirms (6) auch die Austrittsmündung (2) des Extruders (1) umschließt.

16. Vorrichtung nach Anspruch 13, dadurch gekennzeichnet, daß die Kavitäten (20) der Walze (4) in eine thermisch stabile Mantelschicht (Walzenmantel 5) aus Kunststoff eingearbeitet ist, wobei der Kunststoff aus der Gruppe gewählt ist:
Silikonkautschuk, Polytetrafluorethylen, Polyester, Polyetherimide, Polysulfone, Polyamide, Polycarbonate, Expoxydharze, ungesättigte Polyesterharze, elastische Fluor-Polymere.

17. Vorrichtung nach Anspruch 13, dadurch gekennzeichnet, daß Kavitäten mithilfe eines Energiestrahls, vorzugsweise Laserstrahls, in die Mantelschicht eingebracht sind.

18. Vorrichtung nach Anspruch 17, dadurch gekennzeichnet, daß die Poren (20) radial und in von der Radialenrichtung abweichenden Richtungen ausgerichtet sind.

19. Vorrichtung nach einem der vorhergehenden Ansprüche 13 bis 18, dadurch gekennzeichnet, daß die Kavitäten (20) die Form von langgestreckten Kegeln oder Kegelstümpfen haben.

20. Vorrichtung nach einem der vorhergehenden Ansprüche 13 - 19, dadurch gekennzeichnet, daß zwischen Extruder-Mündung (2) und Austritt aus dem Vakuumschirm (6) eine Rakel (19) angeordnet ist.

21. Vorrichtung nach Anspruch 13, dadurch gekennzeichnet, daß die Extruder-Mündung (2) eine Mehrfachprodukt-Düse (2') ist.

## Claims

1. A process for producing a surface-structured, sheet-like semifinished product from a thermoplastic, wherein
- a thermoplastic material in a molten state is extruded on a moving adjustable-temperature belt or roller surface (5) formed with a structure (matrix) which is the negative of the desired structure and with cavities in an outlet front (17) disposed transversely to the direction of motion, wherein the thermoplastic material is in intimate contact with the structure of the surface (5) and the molten thermoplastic remaining on the surface is solidified by cooling, whereupon the side brought into contact with the belt or roller surface (5) acquires the corresponding surface structure,
- and after solidification the semifinished product is removed from the surface,
characterised in that
areas of the belt or roller surface (5) are subjected from the exterior to a negative pressure which is at a maximum immediately in front of the outlet front (in the direction of travel of the surface), so that the cavities (20) belonging to the matrix (25) are under negative pressure when the outlet front reaches them and are completely filled with thermoplastic material.

2. A process according to claim 1, characterised in that the roller surface (5) is the outside of a cylindrical roller jacket.

3. A process according to claim 1, characterised in that the negative pressure is between 0.1 and 3.0 bar (10 and 300 kPa), preferably between 0.1 and 0.3 bar (10 and 30 kPa) below ambient pressure.

4. A process according to claim 2, characterised in that the thermoplastic material leaving the outlet front is cooled and solidified during further rotation of the roller through an angle between 180 and 300°.

5. A process according to any of the preceding claims, characterised in that in order to produce a semifinished product, particularly a plastic sheet, with a pile fabric-like surface, the matrix has numerous pores (20).

6. A process according to any of the preceding claims, characterised in that it is performed with thermoplastics from the following group: polyolefins, polyesters, polyurethanes, polyethers, polyester amides or mixtures or copolymers thereof.

7. A method according to any of the preceding claims, characterised by production of a two-layer semifinished product, wherein the layer coming into contact with the belt or roller surface (5) penetrates into the matrix whereas the other or top layer adheres firmly to the bottom layer.

8. A method according to claim 7, characterised in that the top layer has a lower melt flow index than the layer (contact layer) in contact with the belt or roller surface (5).

9. A process according to claim 8, characterised in that the melt-flow index of the top layer, measured to DIN 53735 when tested at 2.16 kg and 190°C is between 3 and 30 and the melt-flow index of the layer in contact with the belt or roller surface (5) is between 100 and 300 when tested at 2.16 kg and 190°C.

10. A process according to claim 7, characterised in that the top layer and the contact layer are chemically different and consist e.g. of the following pairs:
- polyethylene and polypropylene or
- polyethylene and polyester.

11. A process according to any of the preceding claims, characterised in that the sheet is coated with a nonwoven layer before cooling.

12. A process according to any of the preceding claims, characterised in that the sheet is made relatively thick and is subsequently made thinner by stretching in at least one direction.

13. A device for working the process according to claim 1 and other claims if applicable and having the following components:
- an extruder (1),
- a belt or roller (4) associated with the extruder and having an adjustable-temperature surface (5) formed with a structure comprising numerous cavities (20),
characterised in that
the cavities are hermetically sealed from the interior of the belt or roller (4) and a screen (6) sliding on and sealed from the belt or roller surface (5) is disposed in the region of the extruder mouth and a negative pressure can be generated therein so that the cavities (20) are evacuated immediately before the outlet front (17) of the plastified material.

14. A device according to claim 13, characterised in that the screen (6) is connected to a vacuum pump (7).

15. A device according to claim 14, characterised in that a peripheral lower edge of the screen (6) also surrounds the outlet mouth (2) of the extruder (1).

16. A device according to claim 13, characterised in that the cavities (20) on the roller (4) are formed in a thermally stable plastic jacket layer (roller jacket 5), the plastic being chosen from the following group: silicone rubber, polytetrafluoroethylene, polyester, polyether imides, polysulphones, polyamides, polycarbonates, epoxy resins, unsaturated polyester resins and elastic fluoropolymers.

17. A device according to claim 13, characterised in that cavities are formed in the jacket layer by an energy beam, preferably a laser beam.

18. A device according to claim 17, characterised in that the pores (20) are aligned radially and in directions deviating from the radial direction.

19. A device according to any of the preceding claims 13 to 18, characterised in that the cavities (20) are in the form of elongate cones or truncated cones.

20. A device according to any of the preceding claims 13 - 19, characterised in that a doctor blade (19) is disposed between the extruder mouth (2) and the outlet from the vacuum screen (6).

21. A device according to claim 13, characterised in that the extruder mouth (2) is a multiple-product nozzle (2').

## Revendications

1. Procédé de fabrication d'un produit semi-fini pelliculaire en matière thermoplastique, du type d'un film, à structuration superficielle,
- suivant lequel une matière synthétique thermoplastique à l'état fondu est extrudée sur une surface de bande ou rouleau (5) en déplacement, réglable en température, qui présente une structure en négatif complémentaire de la structure de surface désirée (matrice), avec des cavités ouvertes en sortie frontale (17) transversalement à la direction de déplacement, de sorte que le contact de la matière synthétique thermoplastique est assuré suivant la structure de la surface (5) et que la matière synthétique thermoplastique fondue - toujours reposant sur la surface - est amenée à solidification par refroidissement, cette matière prenant alors la structure superficielle correspondante sur la face mise en contact avec la surface de bande ou rouleau,
- puis, après solidification, le produit semi-fini est retiré de la surface,
caractérisé en ce que
la surface de bande ou rouleau (5) est soumise à une dépression qui lui est appliquée de l'extérieur, laquelle atteint sa valeur maximale juste avant la sortie frontale (suivant la direction de déplacement de la surface), de sorte que les cavités (20) appartenant à la matrice (25) sont soumises à une dépression lorsque la sortie frontale les atteint et que ces cavités se remplissent entièrement de la matière synthétique thermoplastique.

2. Procédé selon la revendication 1, caractérisé en ce que la surface de rouleau (5) est constituée par la face externe d'une enveloppe cylindrique.

3. Procédé selon la revendication 1, caractérisé en ce que la dépression est d'une valeur comprise entre 0,1 à 3,0 (10 et 300 kPa), de préférence entre 0,1 et 0,3 bar (10 et 30 kPa) inférieure à la pression ambiante.

4. Procédé selon la revendication 2, caractérisé en ce que le refroidissement et la solidification de la matière synthétique thermoplastique quittant la sortie frontale se produisent au cours d'une rotation supplémentaire du rouleau sur un angle de rotation compris entre 180 à 300 degrés.

5. Procédé selon l'une quelconque des revendications précédentes, caractérisé en ce que pour obtenir un produit semi-fini, en particulier un film en matière synthétique, qui présente une surface du type velours, la matrice comporte une multitude de pores (20).

6. Procédé selon l'une quelconque des revendications précédentes, caractérisé en ce que le procédé est mis en oeuvre avec des matières thermoplastiques relevant des groupes suivants : polyoléfine, polyester, polyuréthane, polyéther, polyesteramide, de même que leurs mélanges ou copolymères.

7. Procédé selon l'une quelconque des revendications précédentes, caractérisé en ce que l'on obtient un produit semi-fini constitué de deux couches, parmi lesquelles la couche venant en contact avec la surface de bande ou rouleau pénètre dans la matrice, tandis que l'autre forme une couche supérieure adhérant fermement à la couche inférieure.

8. Procédé selon la revendication 7, caractérisé en ce que la couche supérieure possède un indice de fusion plus faible que celui de la couche (5) venant en contact avec la surface de bande ou rouleau (couche de contact).

9. Procédé selon la revendication 8, caractérisé en ce que l'indice de fusion de la couche supérieure, mesuré en conformité avec la norme DIN 53735 dans des conditions d'essai de 2,16 kg et 190°C, est compris entre 3 et 30, et en ce que l'indice de fusion de la couche venant en contact avec la surface de bande ou rouleau (5) est compris entre 100 et 300 dans des conditions d'essai de 2,16 kg et 190°C.

10. Procédé selon la revendication 7, caractérisé en ce que la couche supérieure et la couche de contact sont chimiquement différentes et en ce qu'à titre d'exemples, elles sont constituées des couples suivants :
polyéthylène ./. polypropylène,
polyéthylène ./. polyester.

11. Procédé selon l'une quelconque des revendications précédentes, caractérisé en ce que le film est doublé d'un voile avant refroidissement.

12. Procédé selon l'une quelconque des revendications précédentes, caractérisé en ce que le film est réalisé relativement épais et en ce qu'il est ensuite aminci par étirage dans au moins une direction.

13. Dispositif pour la mise en oeuvre du procédé selon la revendication 1 et éventuellement d'autres revendications, comprenant les pièces suivantes :
- une extrudeuse (1),
- un(e) bande ou rouleau associé(e) à l'extrudeuse formant une surface de bande ou rouleau (5) à température réglable qui présente une structure à multiples cavités (1),
caractérisé en ce que
les cavités sont fermées hermétiquement vers l'intérieur de la bande ou rouleau (4),
et en ce qu'il est disposé, au voisinage de l'embouchure de l'extrudeuse, un écran étanche, en contact glissant avec la surface de bande ou rouleau (5), dans lequel on peut créer une dépression de manière à assurer une évacuation des cavités (20) juste avant la sortie frontale (17) de la masse en matière synthétique plastifiée.

14. Dispositif selon la revendication 13, caractérisé en ce que l'écran (6) est relié à une pompe à vide (7).

15. Dispositif selon la revendication 14, caractérisé en ce qu'un bord périphérique inférieur de l'écran (6) s'étend également autour de l'embouchure de sortie (2) de l'extrudeuse (1).

16. Dispositif selon la revendication 13, caractérisé en ce que les cavités (20) du rouleau (4) sont formées dans une couche enveloppe thermiquement stable (bandage 5) en matière synthétique, la matière synthétique étant choisie dans le groupe comprenant :
caoutchouc de silicone, polytétrafluoréthylène, polyester, polyétherimide, polysulfone, polyamide, polycarbonate, résines époxydes, résines de polyesters insaturés, élastomères fluorés.

17. Dispositif selon la revendication 13, caractérisé en ce que les cavités sont réalisées dans la couche enveloppe de rouleau à l'aide de radiations énergétiques, de préférence à l'aide d'un rayon laser.

18. Dispositif selon la revendication 17, caractérisé en ce que les pores (20) sont orientés radialement et dans des directions divergeantes de l'arrangement radial.

19. Dispositif selon l'une des revendications précédentes 13 à 18, caractérisé en ce que les cavités (20) ont une forme allongée de cônes ou troncs de cônes.

20. Dispositif selon l'une des revendications précédentes 13 à 19, caractérisé en ce qu'il est disposé une raclette (19) entre l'embouchure de l'extrudeuse (2) et la sortie de l'écran sous vide (6).

21. Dispositif selon la revendication 13 caractérisé en ce que l'embouchure de l'extrudeuse (2) est une filière à produits ultiples (2').
